# EUROPEAN PATENT APPLICATION

(11) **EP 4 102 177 A1**
(43) Date of publication of application: **14.12.2022**
(21) Application number: 22164088.1
(22) Date of filing: 24.03.2022
(51) Int. Cl.: G01B 11/25

(54) **STRUCTURED-LIGHT SCANNING SYSTEM WITH THERMAL COMPENSATION**

(30) Priority: 08.06.2021 US 202117341769
(71) Applicant: Himax Technologies Limited, Tainan City 74148 (TW)
(72) Inventor: Tsai, Chin-Jung, 74148 Tainan City (TW); Chang, Nai-Ting, 74148 Tainan City (TW); CHU, Yu-Hsuan, 74148 Tainan City (TW)
(74) Representative: Karakatsanis, Georgios

(57) **Abstract**

A structured-light scanning system with thermal compensation includes a structured-light projector that generates a predetermined projected pattern of light, which is then projected onto and reflected from an object, thereby resulting in a reflected pattern of light; an image sensor that captures the reflected pattern of light; and a digital processing unit that generates a depth map according to the reflected pattern of light and a compensated projected pattern associated with a current temperature.

## Description

### BACKGROUND OF THE INVENTION

### 1. FIELD OF THE INVENTION

The present invention generally relates to a structured-light scanning system, and more particularly to a structured-light scanning system with thermal compensation.

### 2. DESCRIPTION OF RELATED ART

Structured-light scanning is the process of projecting a pattern of light onto a scene. The reflected pattern is captured by a camera, and then processed, for example, by triangulation, to reconstruct a three-dimensional or depth map of the objects in the scene. The structured-light scanning may, for example, be adapted to object detection for detecting objects of a certain class in digital images and videos. Specifically, the structured-light scanning may be adapted to face detection, which is a specific case of object detection, in mobile devices such as cellphones for detecting frontal human faces for security reasons.

However, the components of a structured-light scanning system are liable to variations, drifts or deformations due to temperature change. Such variations may distort a projected pattern of light, and thus reduce detection accuracy. For example, wavelength of a light source may vary, effective focal length of a lens may drift, and a printed circuit board may be deformed due to temperature change.

A need has thus arisen to propose a novel scheme to compensate thermal effects of a structured-light scanning system.

### SUMMARY OF THE INVENTION

In view of the foregoing, it is an object of the embodiment of the present invention to provide a structured-light scanning system capable of compensating thermal effects.

According to one embodiment, a structured-light scanning system with thermal compensation includes a structured-light projector, an image sensor and a digital processing unit. The structured-light projector generates a predetermined projected pattern of light, which is then projected onto and reflected from an object, thereby resulting in a reflected pattern of light. The image sensor captures the reflected pattern of light. The digital processing unit generates a depth map according to the reflected pattern of light and a compensated projected pattern associated with a current temperature. In another embodiment, the digital processing unit generates a depth map according to the reflected pattern of light, a reference projected pattern and a displacement map associated with a current temperature.

### BRIEF DESCRIPTION OF THE DRAWINGS

FIG. 1 shows a block diagram illustrating a structured-light scanning system with thermal compensation according to one embodiment of the present invention;
FIG. 2A shows a flow diagram illustrating a calibration stage, on which the plurality of compensated projected patterns associated with different temperatures are generated and stored, according to a first embodiment of the present embodiment;
FIG. 2B shows an example of generating a plurality of compensated projected patterns associated with different temperatures stored in the memory device;
FIG. 2C shows a flow diagram illustrating a depth decoding stage, on which a compensated projected pattern associated with the current temperature is retrieved and the depth map is accordingly generated, according to the first embodiment of the present embodiment;
FIG. 3A shows a flow diagram illustrating a calibration stage, on which a reference projected pattern associated with a reference temperature and a plurality of displacement maps associated with different temperatures are generated and stored, according to a second embodiment of the present embodiment;
FIG. 3B shows an example of generating a reference projected pattern associated with a reference temperature and a plurality of displacement maps associated with different temperatures stored in the memory device;
FIG. 3C shows a flow diagram illustrating a depth decoding stage, on which a reference projected pattern associated with a reference temperature and a displacement map associated with the current (ambient) temperature is retrieved and the depth map is accordingly generated, according to the second embodiment of the present embodiment; and
FIG. 3D illustrates hardware implementation of generating the compensated projected pattern.

### DETAILED DESCRIPTION OF THE INVENTION

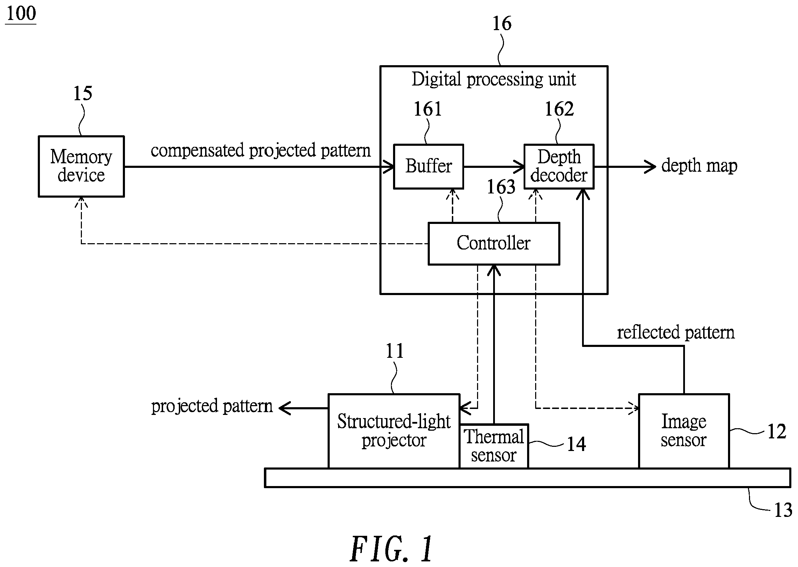

FIG. 1 shows a block diagram illustrating a structured-light scanning system with thermal compensation 100 according to one embodiment of the present invention.

In the embodiment, the structured-light scanning system with thermal compensation (system hereinafter) 100 may include a structured-light projector 11 configured to generate a predetermined projected (or ground truth) pattern of light. The projected pattern of light is then projected onto and reflected from an object (not shown), resulting in a reflected pattern of light.

The system 100 of the embodiment may include an image sensor 12, such as a camera, configured to capture the reflected pattern of light.

In one embodiment, the system 100 may include a holder 13 (also called immobilizer), such as a printed circuit board, configured to hold the structured-light projector 11 and the image sensor 12 such that relative positions of the structured-light projector 11 and the image sensor 12 may be maintained.

According to one aspect of the embodiment, the system 100 may include a thermal sensor 14 (also called temperature sensor) configured to measure current (ambient) temperature, according to which thermal compensation may be performed. In one embodiment, the thermal sensor 14 may be disposed in or adjacent to the structured-light projector 11 for the reasons that the structured-light projector 11 may ordinarily suffer temperature rise and fall. Generally speaking, however, the thermal sensor 14 may be disposed everywhere in the system 100 for measuring the ambient temperature thereof.

According to another aspect of the embodiment, the system 100 may include a memory device 15, such as a flash memory or read-only memory, configured to provide a (predetermined) compensated projected pattern (or ground truth map) associated with the current temperature. In one embodiment, a plurality of compensated projected patterns associated with different temperatures are stored in the memory device 15. In another embodiment, a reference projected pattern associated with a reference temperature (e.g., room temperature) and a plurality of displacement maps (DMs) (representing dot shift between corresponding compensated projected patterns and the reference projected pattern) associated with different temperatures are stored in the memory device 15.

The system 100 of the embodiment may include a digital processing unit 16 configured to generate a (compensated) depth map according to the reflected pattern of light (from the image sensor 12) and a compensated projected pattern associated with the current temperature. Specifically, the digital processing unit 16 may include a buffer 161, such as a random-access memory, configured to temporarily store the compensated projected pattern associated with the current temperature.

The digital processing unit 16 may include a depth decoder 162 configured to generate the (compensated) depth map according to the compensated projected pattern (associated with the current temperature) and the reflected pattern (from the image sensor 12). Conventional depth decoding techniques may be adopted to obtain the depth map, details of which are thus omitted for brevity.

The digital processing unit 16 may include a controller 163 configured to control operations of the buffer 161 and the depth decoder 162 (as denoted by the dashed lines), configured to coordinate the structured-light projector 11 and the image sensor 12 (as denoted by the dashed lines), and particularly configured to controllably obtain the compensated projected pattern (associated with the current temperature) from the memory device 15 according to the current temperature received from the thermal sensor 14.

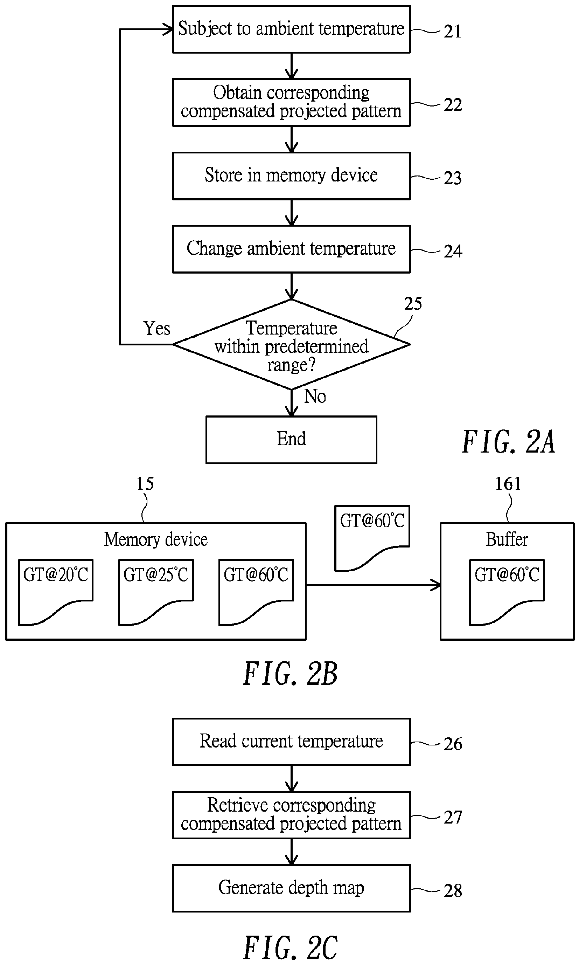

FIG. 2A shows a flow diagram illustrating a calibration stage, on which the plurality of compensated projected patterns associated with different temperatures are generated and stored, according to a first embodiment of the present embodiment.

In step 21, the system 100 is currently subject to a controlled ambient temperature, and, in step 22, a corresponding compensated projected pattern is obtained such that a (predetermined) objective depth map may be generated by the depth decoder 162. In step 23, the compensated projected pattern is stored in the memory device 15. In step 24, the ambient temperature is controllably changed (for example, increased), and the flow goes back to step 21 if the changed temperature is still within a predetermined range (step 25). Accordingly, a plurality of compensated projected patterns associated with different temperatures are stored in the memory device 15. It is noted that, if the variation of the compensated projected patterns is device-independent, the calibration stage may be performed only once, otherwise the calibration stages should be respectively performed with respect to individual devices.

FIG. 2B shows an example of generating a plurality of compensated projected patterns associated with different temperatures stored in the memory device 15. In this example, compensated projected patterns (or ground truth maps, GTs) associated with ambient temperatures of 20, 25 and 60 °C are generated and stored in the memory device 15 on the calibration stage.

FIG. 2C shows a flow diagram illustrating a depth decoding stage, on which a compensated projected pattern associated with the current (ambient) temperature is retrieved and the depth map is accordingly generated, according to the first embodiment of the present embodiment.

In step 26, the current temperature (provided by the thermal sensor 14) is read by the controller 163. Next, in step 27, a corresponding compensated projected pattern associated with the current temperature is retrieved from the memory device 15 and is temporarily stored in the buffer 161. As exemplified in FIG. 2B, a compensated projected pattern associated with the current temperature of 60 °C is retrieved and temporarily stored in the buffer 161. Subsequently, in step 28, the depth decoder 162 generates the (compensated) depth map according to the compensated projected pattern (associated with the current temperature) and the reflected pattern (from the image sensor 12).

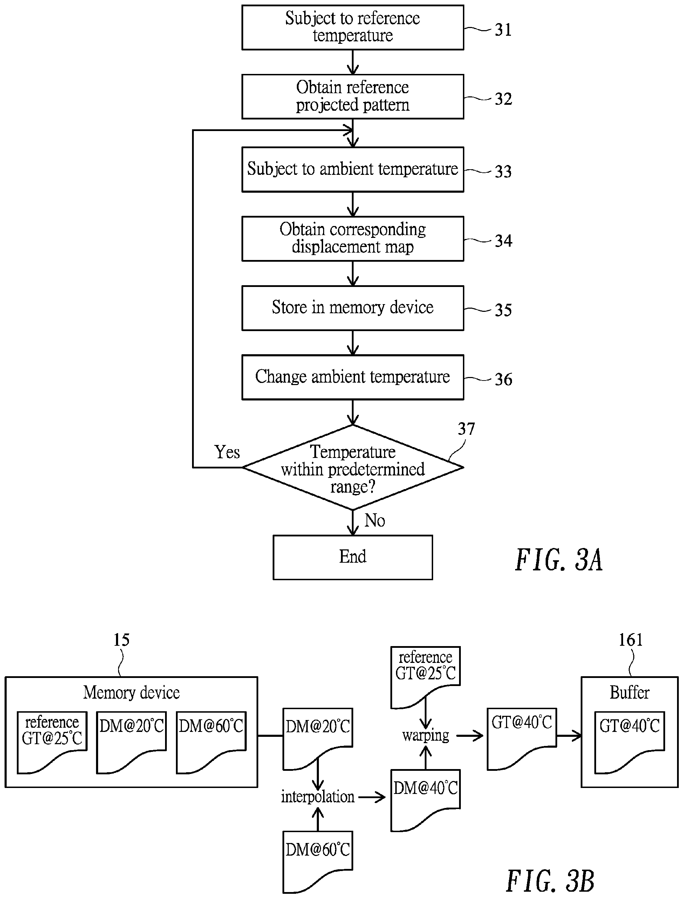

FIG. 3A shows a flow diagram illustrating a calibration stage, on which a reference projected pattern associated with a reference temperature and a plurality of displacement maps associated with different temperatures are generated and stored, according to a second embodiment of the present embodiment.

In step 31, the system 100 is subject to a reference temperature, and, in step 32, a corresponding reference projected pattern is obtained such that a (predetermined) objective depth map may be generated by the depth decoder 162. The reference projected pattern is then stored in the memory device 15. In step 33, the system 100 is currently subject to a controlled ambient temperature, and, in step 34, a corresponding displacement map (DM) between a corresponding compensated projected pattern and the reference projected pattern is obtained. In step 35, the displacement map (DM) is stored in the memory device 15. In step 36, the ambient temperature is controllably changed (for example, increased), and the flow goes back to step 33 if the changed temperature is still within a predetermined range (step 37). Accordingly, the reference projected pattern and a plurality of displacement maps (DMs) associated with different temperatures are stored in the memory device 15.

FIG. 3B shows an example of generating a reference projected pattern associated with a reference temperature and a plurality of displacement maps associated with different temperatures stored in the memory device 15. In this example, a reference projected pattern (or ground truth map, GT) associated with a reference temperature (e.g., 25°C) is generated and stored in the memory device 15, and displacement maps (DMs) associated with ambient temperatures of 20 and 60 °C are generated and stored in the memory device 15 on the calibration stage.

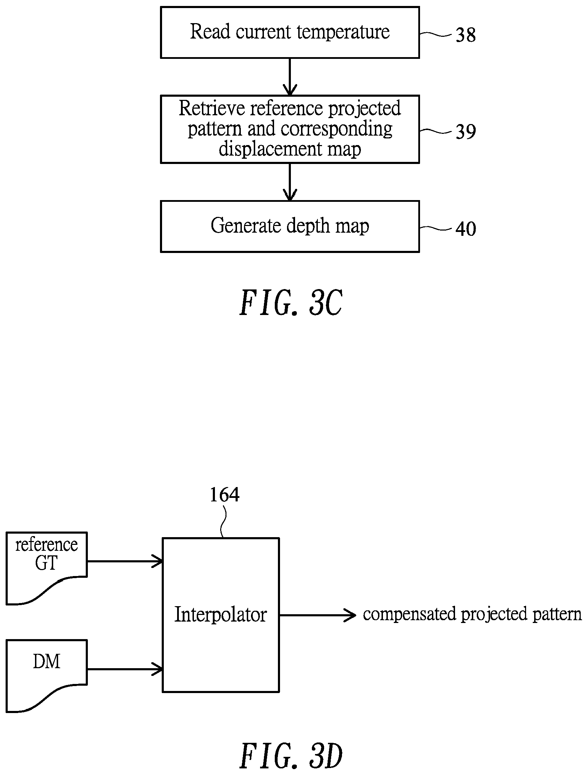

FIG. 3C shows a flow diagram illustrating a depth decoding stage, on which a reference projected pattern associated with a reference temperature and a displacement map associated with the current (ambient) temperature is retrieved and the depth map is accordingly generated, according to the second embodiment of the present embodiment.

In step 38, the current temperature (provided by the thermal sensor 14) is read by the controller 163. Next, in step 39, a reference projected pattern associated with a reference temperature and a displacement map associated with the current temperature are obtained from the memory device 15. Subsequently, in step 40, the depth decoder 162 generates the (compensated) depth map according to the reference projected pattern, the displacement map (associated with the current temperature) and the reflected pattern (from the image sensor 12). Specifically, a compensated projected pattern may be generated by warping the reference projected pattern with the displacement map, for example, by an interpolator 164 (for example, disposed in the digital processing unit 16) as shown in FIG. 3D illustrating hardware implementation of generating the compensated projected pattern.

Subsequently, the depth map may then be generated (by the depth decoder 162) according to the compensated projected pattern and the reflected pattern (from the image sensor 12). It is noted that, when there is no displacement map associated with a temperature matching with the current temperature, a displacement map may be generated (or estimated) by performing interpolation on the two displacement maps associated with temperatures (just) larger and (just) less than the current temperature, respectively. For example, in the example as shown in FIG. 3B, a displacement map associated with temperature of 40 ° C may be estimated by performing interpolation on the displacement maps associated with temperatures of 20 and 60°C, respectively.

## Claims

1. A structured-light scanning system with thermal compensation, comprising:
a structured-light projector that generates a predetermined projected pattern of light, which is then projected onto and reflected from an object, thereby resulting in a reflected pattern of light;
an image sensor that captures the reflected pattern of light; and
a digital processing unit that generates a depth map according to the reflected pattern of light and a compensated projected pattern associated with a current temperature.

2. The system of claim 1, further comprising a memory device that stores a plurality of compensated projected patterns associated with different temperatures, one of which is retrieved by the digital processing unit as the compensated projected pattern associated with the current temperature.

3. The system of claim 2, wherein the digital processing unit comprises a buffer that temporarily stores the compensated projected pattern associated with the current temperature.

4. The system of claim 3, wherein the digital processing unit comprises a controller that controls the buffer to retrieve the compensated projected pattern associated with the current temperature.

5. The system of claim 1, wherein the digital processing unit comprises a depth decoder that generates the depth map according to the reflected pattern of light and the compensated projected pattern associated with the current temperature.

6. The system of claim 1, further comprising a thermal sensor that measures the current temperature.

7. The system of claim 6, wherein the thermal sensor is disposed in or adjacent to the structured-light projector.

8. A structured-light scanning system with thermal compensation, comprising:
a structured-light projector that generates a predetermined projected pattern of light, which is then projected onto and reflected from an object, thereby resulting in a reflected pattern of light;
an image sensor that captures the reflected pattern of light; and
a digital processing unit that generates a depth map according to the reflected pattern of light, a reference projected pattern and a displacement map associated with a current temperature;
wherein the reference projected pattern is associated with a reference temperature, and the displacement map associated with the current temperature represents dot shift between a corresponding compensated projected pattern associated with the current temperature and the reference projected pattern.

9. The system of claim 8, further comprising a memory device that stores the reference projected pattern and a plurality of displacement maps associated with different temperatures.

10. The system of claim 9, wherein the digital processing unit comprises a buffer that temporarily stores the reference projected pattern and the displacement map associated with the current temperature.

11. The system of claim 10, wherein the digital processing unit comprises a controller that controls the buffer to retrieve the reference projected pattern and the displacement map associated with the current temperature.

12. The system of claim 9, wherein a displacement map is generated by performing interpolation on two displacement maps stored in the memory device, when there is no displacement map in the memory device associated with a temperature matching with the current temperature.

13. The system of claim 8, wherein the digital processing unit comprises a depth decoder that generates the depth map according to the reflected pattern of light, the reference projected pattern and the displacement map associated with the current temperature.

14. The system of claim 8, further comprising a thermal sensor that measures the current temperature.

15. The system of claim 8, wherein the digital processing unit comprises an interpolator that warps the reference projected pattern by the displacement map associated with the current temperature, thereby resulting in the corresponding compensated projected pattern associated with the current temperature.
